# FASCICULE DE BREVET EUROPEEN

(11) **EP 1 862 423 B1**
(45) Date de publication et mention de la délivrance du brevet: **03.10.2012**
(21) Numéro de dépôt: 07301043.1
(22) Date de dépôt: 16.05.2007
(51) Int. Cl.: B66F 7/14

(54) **Dispositif de levage à écrou de sécurité**
Hebevorrichtung mit Sicherheitsmutter
Hoisting device with safety nut

(30) Priorité: 30.05.2006 FR 0651950
(43) Date de publication de la demande: 05.12.2007
(73) Titulaire: SEFAC, Société Anonyme, 08800 Montherme (FR)
(72) Inventeur: Letellier, Eric, 08000 Charleville Mézières (FR)
(74) Mandataire: Rhein, Alain

(56) Documents cités:
- DE-A1- 2 921 835
- GB-A- 2 065 600

## Description

La présente invention concerne un dispositif de levage, notamment de véhicule, comprenant une colonne sensiblement verticale formant bâti et des moyens de levage mobiles le long de ladite colonne sous l'action de la commande en rotation, par des moyens moteurs appropriés, d'une tige filetée et du déplacement, le long de cette dernière, d'un écrou solidaire d'un chariot sur lequel repose la charge à élever.

La présente invention trouvera son application dans le domaine des dispositifs de manutention, et, plus particulièrement, des dispositifs de levage, notamment de véhicules.

La sécurité des stations de levage, en particulier de véhicules automobiles ou ferroviaires, est un problème important, auquel des réponses diverses ont été apportées.

De nombreux dispositifs de levage se présentent sous la forme d'une colonne verticale formant bâti, ou d'une pluralité de telles colonnes, reposant au sol par l'intermédiaire d'une embase. Le long d'une telle colonne verticale sont à même de se déplacer des moyens de levage sous la forme d'un ou plusieurs bras horizontaux, ou d'un chariot mobile. Celui-ci est guidé en déplacement le long de la colonne par l'intermédiaire de moyens de guidage équipant cette dernière, et de moyens complémentaires de guidage dont est équipé ce chariot.

La commande en déplacement du chariot est obtenue, tout particulièrement, par l'intermédiaire d'une tige filetée verticale, montée en rotation dans la colonne, ou constituant cette dernière, et susceptible d'être entraînée par des moyens moteurs, notamment de type électrique, équipant la tête de colonne. Par ailleurs, un écrou, rendu solidaire des moyens de levage, est monté sur la tige filetée de sorte que, lors de la commande en rotation de cette dernière, cet écrou monte ou descend, entraînant, par là même, lesdits moyens de levage.

Il est évident que ces dispositifs de levage, destinés à soulever des charges relativement importantes, comportent un certain nombre de sécurités empêchant la descente de la charge lors d'une défaillance quelconque, notamment des moyens moteurs.

On connaît l'utilisation d'écrous dits irréversibles, dont l'angle d'hélice est tel qu'il oppose, dans le sens de la descente de la charge, un couple résistant de moment supérieur au couple produit par la descente de cette charge. L'emploi de tels écrous, de rendement faible, soumis à des frottements élevés et à une usure importante, nécessite une installation de lubrification, ainsi qu'une puissance motrice importante, ce qui se traduit par un coût de revient élevé.

D'autres systèmes utilisent des écrous réversibles, à rendement élevé, de type écrous à billes, ou en polyamide ou encore en composite. De tels systèmes incorporent des systèmes parachutes à commande électrique ou électronique ayant pour fonction de détecter, de manière instantanée, une descente involontaire des moyens de levage, et d'immobiliser, immédiatement, ces derniers. Toutefois, de tels systèmes nécessitent d'être eux-mêmes redoublés, car le système parachute est à la merci de la moindre défaillance d'un circuit ou d'une connexion.

Le document FR 2 701 252 propose l'utilisation, en combinaison avec un écrou réversible, de moyens de frottement aptes à créer, lors de la descente des moyens de levage, un couple résistant de moment supérieur ou égal à celui du couple produit par la charge lors de sa descente, le système comportant encore des moyens aptes à annihiler l'effet des moyens de frottement lors de la commande en montée des moyens de levage. Cette solution, fiable, nécessite toutefois une consommation d'énergie lors de la commande de descente de la charge.

En somme, ces solutions connues pour assurer la sécurité, face au risque de descente fortuite de la charge, sont, soit consommatrices d'énergie de manoeuvre ou/et de graissage, ou résultent de la combinaison avec des systèmes électriques ou électroniques qui nécessitent d'être doublés, pour assurer une sécurité suffisante.

On connaît encore, par le document GB 2 065 600, un dispositif de levage pour véhicule, avec, sur une colonne de levage, un boîtier comportant un premier écrou porteur coopérant avec une vis, et un deuxième écrou de sécurité, coaxial au précédent et en-dessous de lui; ce dispositif ne comporte pas de moyen de solidarisation entre le premier et le deuxième écrou, quand ils sont écartés l'un de l'autre. Aucun moyen de permet de prévenir la rupture de l'écrou porteur.

De façon analogue, le document DE 29 21 835 décrit un dispositif de levage à deux colonnes comportant chacune un chariot avec un écrou porteur et un écrou de sécurité, les deux chariots étant reliés, par l'intermédiaire d'un ensemble de poulies, par un câble auxquels sont liés des taquets de fin de course pour réguler l'action de moteurs indépendants d'entraînement des vis sans fin des deux colonnes. Chaque extrémité du câble est reliée à un support conçu pour être déformé par pliage en cas de chute d'un écrou porteur, pour déclencher l'arrêt du moteur concerné en cas de rupture de l'écrou porteur.

Un document DE 202 07 273 décrit, encore, un système à écrou porteur et écrou de sécurité, reliés par une goupille qui maintient une distance constante entre eux, ce qui se traduit, en cas de rupture de l'écrou porteur, par une chute de la charge sur l'écrou de sécurité.

Les solutions connues de l'état de la technique apportent une sécurité en cas de rupture, mais elles ne sont pas conçues pour pallier et visualiser l'usure de l'écrou porteur. Si elles permettent une immobilisation du dispositif de levage en cas de rupture d'écrou, elles sont mal adaptées à la dépose au sol de la charge soulevée.

L'invention a pour but de pallier les inconvénients de l'état de la technique en proposant une solution économique, entièrement mécanique, et qui permet, encore, de prévenir la défaillance éventuelle due à l'usure du composant le plus exposé. Cette solution permet, encore, l'équipement d'installations existantes et leur mise en sécurité, à moindre coût et sans nécessiter une longue immobilisation.

A cet effet, l'invention concerne un dispositif de levage, notamment de véhicule, comprenant une colonne sensiblement verticale formant bâti et des moyens de levage mobiles le long de ladite colonne sous l'action de la commande en rotation, par des moyens moteurs appropriés, d'une tige filetée et du déplacement, le long de cette dernière, d'un écrou solidaire d'un chariot sur lequel repose une charge à élever, ledit écrou étant un écrou parachute, qui comporte un premier écrou porteur sur lequel repose ledit chariot, et un deuxième écrou de sécurité coaxial au précédent et placé en-dessous de lui, et conçu apte à recevoir et à supporter la charge constituée par ledit chariot et la charge que celui-ci supporte et ledit premier écrou porteur en cas de défaillance de ce dernier, notamment par usure ou rupture, caractérisé par le fait que ledit écrou parachute comporte des moyens de guidage, qui sont conçus aptes à coopérer avec des moyens de guidage complémentaire, de façon à solidariser en rotation ledit premier écrou porteur et ledit deuxième écrou de sécurité quand ils sont éloignés l'un de l'autre, et à cesser de coopérer avec lesdits moyens de guidage complémentaire, quand ledit premier écrou porteur et ledit deuxième écrou de sécurité sont en contact l'un avec l'autre.

Selon une autre caractéristique de l'invention, ledit premier écrou porteur est, à l'état neuf, écarté dudit deuxième écrou de sécurité.

Selon une caractéristique supplémentaire de l'invention, ledit écrou parachute comporte au moins un indicateur d'usure dudit premier écrou porteur.

Selon une caractéristique particulière, ledit indicateur d'usure compare la position d'une surface fixe dudit deuxième écrou de sécurité, avec celle d'un repère solidaire dudit premier écrou porteur.

D'autres caractéristiques et avantages de l'invention ressortiront de la description détaillée qui va suivre des modes de réalisation non limitatifs de l'invention, en référence aux figures annexées dans lesquelles :
- la figure 1 représente, de façon schématisée et partielle, en élévation, une partie d'un dispositif de levage selon l'invention, dans sa plage normale de fonctionnement;
- la figure 2 est une vue analogue à la figure 1, représentant le même dispositif, dans un mode de fonctionnement dégradé.

L'invention concerne un dispositif de levage 1, conçu notamment pour le levage de véhicules.

Un tel dispositif 1 comprend une colonne sensiblement verticale formant bâti.

Il comprend encore des moyens de levage, qui sont mobiles le long de cette colonne sous l'action de la commande en rotation, par des moyens moteurs appropriés, d'une tige filetée 2 et du déplacement, le long de cette dernière, d'un écrou 3.

Sur cet écrou 3 repose, ou est monté solidaire un chariot 4 sur lequel repose une charge 20 à élever, non représentée sur les figures.

On comprendra qu'un dispositif de levage constitué par la juxtaposition de plusieurs dispositifs tels que décrits, avec notamment, de façon classique, un nombre pair de colonnes, reste dans l'esprit de l'invention, et que la présente description n'est limitée à une seule colonne que dans un souci de simplification.

L'écrou 3 est un écrou parachute. Il est composé de plusieurs éléments, qui sont conçus aptes à coopérer entre eux, dans certains domaines d'utilisation selon le niveau d'usure de ses composants.

L'écrou 3 comporte un premier écrou porteur 5, sur lequel repose directement le chariot 4.

Il comporte encore un deuxième écrou de sécurité 6, qui est coaxial au premier écrou porteur 5, et qui est placé en-dessous de lui.

Si le premier écrou porteur 5 est conçu apte à supporter la masse du chariot 4 et de la charge 20 que ce chariot supporte, le deuxième écrou de sécurité 6 est conçu apte à recevoir et à supporter, à la fois la masse constituée par le **chariot4** et la charge 20, et celle constituée par le premier écrou porteur 5 lui-même.

Ainsi, en cas de défaillance du premier écrou porteur 5, notamment par usure ou rupture, en particulier au niveau de son filetage interne, le deuxième écrou de sécurité 6 est dimensionné et implanté de façon à supporter, non seulement la charge statique constituée par le cumul de la masse du chariot 4 et de la charge 20 que ce chariot supporte, et de celle du premier écrou 5, mais encore, la charge dynamique liée à la chute éventuelle du premier écrou porteur 5 et de l'ensemble qu'il supporte, constitué du chariot 4 et de la charge 20.

Ce fonctionnement après défaillance du premier écrou porteur 5 sera qualifié, dans la suite de cette description, de mode dégradé.

C'est pourquoi, si le premier écrou porteur 5 est choisi de préférence dans une matière possédant un bon coefficient de frottement, et permettant d'éviter l'installation d'une installation coûteuse de lubrification, comme par exemple un bronze, le deuxième écrou de sécurité 6 est préférentiellement réalisé dans un alliage ferreux, et en particulier dans une nuance d'acier choisie pour sa résistance aux chocs.

Le deuxième écrou de sécurité 6 n'a pas vocation, en service normal, à supporter la masse du chariot 4 et de la charge 20 que ce chariot 4 supporte. Ne supportant donc que son propre poids, le deuxième écrou de sécurité 6 s'use de façon infime en comparaison avec l'usure du premier écrou porteur 5 qui supporte la masse du chariot 4 et de la charge 20 que ce chariot 4 supporte.

On comprendra que, en fonctionnement normal, seul le premier écrou porteur 5 supporte la masse du chariot 4 et de la charge 20 que ce chariot supporte.

Par contre, en mode dégradé, seul le deuxième écrou de sécurité 6 supporte la charge totale constituée par la masse du chariot 4 et de la charge 20 que ce chariot supporte, d'une part, et de la masse du premier écrou 5, d'autre part.

Il n'est pas possible d'implanter le premier écrou porteur 5 et le deuxième écrou de sécurité 6 de façon jointive l'un avec l'autre. En effet, répondant à des problématiques différentes, ils ont des coefficients de frottement différents, et le premier écrou porteur 5 s'use plus vite que le deuxième écrou de sécurité 6. Un montage jointif aurait inévitablement comme résultante, au bout d'un certain temps, un effet de coincement, et d'usure du deuxième écrou de sécurité 6, ce qui irait précisément à l'encontre du but de sécurité que se propose d'assurer la présente invention.

Aussi, à l'état neuf, le premier écrou porteur 5 et le deuxième écrou de sécurité 6 sont, par construction, éloignés l'un de l'autre.

En mode de fonctionnement normal, ils restent éloignés l'un de l'autre, mais à une distance diminuant au fil du temps, en fonction du différentiel d'usure entre les deux écrous.

A cet effet, l'écrou parachute 3 selon l'invention comporte des moyens de guidage 7, qui sont conçus aptes à coopérer avec des moyens de guidage complémentaire 7A, de façon à solidariser en rotation le premier écrou porteur 5 et le deuxième écrou de sécurité 6 quand ils sont éloignés l'un de l'autre.

Il n'y a qu'en mode dégradé, au-delà d'un certain niveau d'usure du premier écrou porteur 5, en particulier après sa rupture, que le premier écrou porteur 5 et le deuxième écrou de sécurité 6 sont en contact l'un avec l'autre.

Les moyens de guidage 7 sont encore conçus aptes à cesser de coopérer avec les moyens de guidage complémentaire 7A, quand le premier écrou porteur 5 et le deuxième écrou de sécurité 6 sont en contact l'un avec l'autre. Ces derniers ne sont alors plus solidaires en rotation.

Et on comprendra que, dans ce cas, le premier écrou porteur 5 est dans l'incapacité de coopérer avec la tige filetée 2.

Seul le deuxième écrou de sécurité 6 est entraîné par cette tige filetée 2, et le seul mouvement transmis au premier écrou porteur 5 résulte de la friction au niveau de la surface de jonction, préférablement un plan de joint, entre le premier écrou porteur 5 et le deuxième écrou de sécurité 6.

Tel que visible sur les figures, les moyens de guidage 7 et les moyens de guidage complémentaire 7A, dans un mode de réalisation préféré et nullement limitatif, sont constitués par la combinaison d'un doigt 11 solidaire du premier 5 ou du deuxième 6 écrou, et d'une rainure 12 parallèle à la direction de la tige filetée 2 et ouverte à sa partie inférieure 13, cette rainure 12 étant solidaire respectivement du deuxième 6 ou du premier 5 écrou.

Si les figures illustrent un mode de réalisation, dans lequel le doigt 11 est solidaire du premier écrou porteur 5, et la rainure 12 est solidaire du deuxième écrou de sécurité 6, on comprend que la combinaison inverse est tout aussi bien réalisable.

On comprendra naturellement que de tels moyens de guidage 7 et de tels moyens de guidage complémentaire 7A peuvent être, sans changer l'esprit de l'invention, dupliqués et répartis sur la périphérie des deux écrous 5 et 6, par exemple de façon diamétrale.

Le dimensionnement respectif des moyens de guidage 7 et des moyens de guidage complémentaire 7A, en particulier du doigt 11 et de la rainure 12, est calculé de façon à ce que, dans cet exemple non limitatif de réalisation, le doigt 11 puisse échapper hors de la rainure 12 du côté de l'ouverture à sa partie inférieure 13, lorsque le premier écrou porteur 5 vient au contact du deuxième écrou de sécurité 6, de façon à rendre le deuxième écrou de sécurité 6 indépendant en rotation du premier écrou porteur 5.

Ainsi le premier écrou porteur 5 ne vient au contact du deuxième écrou de sécurité 6 que lorsque le filetage interne dudit premier écrou porteur 5 est rompu, ce qui coïncide avec la cessation de la coopération des moyens de guidage 7 et les moyens de guidage complémentaire 7A.

Afin de prévenir une chute du premier écrou porteur 5 et de l'ensemble qu'il supporte, se traduisant nécessairement par des chocs préjudiciables à l'ensemble du mécanisme, l'écrou parachute 3 selon l'invention comporte au moins un indicateur d'usure 8 du premier écrou porteur 5.

Dans un mode particulier de réalisation, tel que visible sur les figures, l'indicateur d'usure 8, non représenté en tant que tel, compare la position d'une surface fixe 9 du deuxième écrou de sécurité 6, avec celle d'un repère 10 solidaire du premier écrou porteur 5.

Tel que visible sur les figures, la surface fixe 9 du deuxième écrou de sécurité 6 est avantageusement constituée par la surface supérieure, préférentiellement plane et perpendiculaire à l'axe de la tige filetée 2, de ce dernier.

Le repère 10 est, avantageusement, calculé de façon à ce que, à l'état neuf des écrous 5 et 6, soit en regard de la surface 9 du deuxième écrou de sécurité 6.

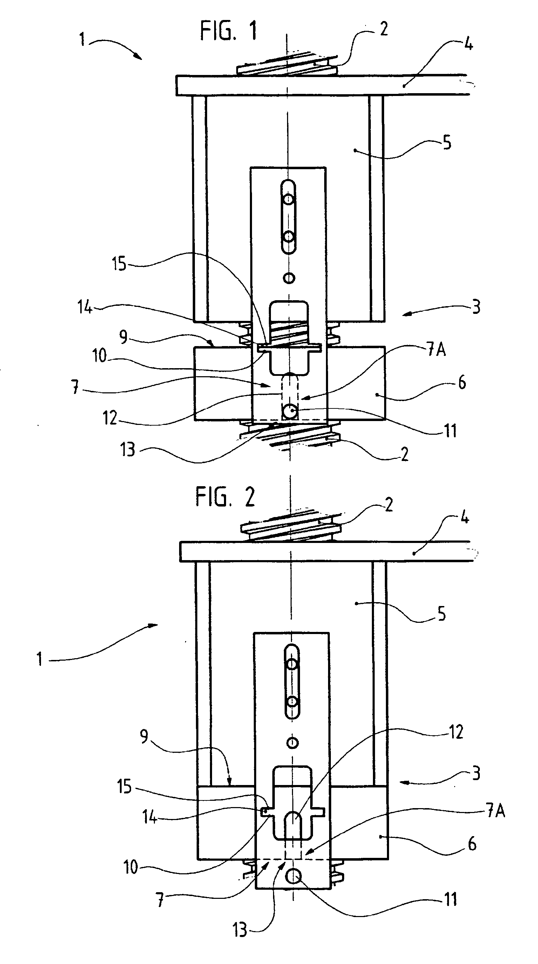

Au fur et à mesure du fonctionnement du dispositif 1 selon l'invention, le premier écrou 5, sous l'effet de son usure, va se rapprocher du deuxième écrou de sécurité 6. Tel que visible sur la figure 1, la surface 9 va s'écarter, vers le haut, du repère 10.

La distance entre cette surface 9 et ce repère 10 procure au service de maintenance une information directe sur l'état d'usure du premier écrou porteur 5.

Dans une réalisation préférée, l'indicateur d'usure 8 comporte une fenêtre de lecture 14 , qui est munie d'un repère 15 d'usure nominale maximale.

Tel que visible sur les figures, dans une réalisation préférée, la fenêtre de lecture 14, bordée par les repères 10 et 14, est ménagée sur une platine solidaire du premier écrou porteur 5, platine qui supporte également le doigt 11.

Cette réalisation très simple est particulièrement économique, et permet une bonne visualisation de l'état de l'installation par l'utilisateur.

La surface 9 va défiler, aux yeux de l'utilisateur, dans cette fenêtre de lecture 14, entre les repères 10 et 15, qui qualifient la zone d'utilisation normale.

La coïncidence de la surface 9 avec ce repère 15 d'usure nominale maximale alerte le service de maintenance sur la nécessité d'une intervention au niveau du premier écrou porteur 5 ; quand la fenêtre de lecture 14 est comblée par le deuxième écrou 6, le premier écrou porteur 5 doit être changé.

Lorsque le dispositif de levage 1 fonctionne en marche dégradée, le coefficient de frottement entre la face supérieure du deuxième écrou de sécurité 6, qui vient en contact avec la face inférieure du premier écrou porteur 5, et cette dernière, est calculé tel que le couple résistant est suffisant pour autoriser la descente de la charge 20, mais qu'il est insuffisant pour en autoriser la montée. En somme, l'utilisateur peut descendre sa charge 20, et libérer le chariot 4, et ainsi sortir d'une situation bloquante, mais il ne peut réutiliser le dispositif de levage 1 sans une remise en état complète de l'écrou parachute 3 selon l'invention.

On notera, encore, que le dispositif de levage 1 selon l'invention incorpore préférentiellement des moyens de lubrification ou de graissage, au niveau de la tige filetée 2 et/ou de l'écrou parachute 3. Du fait de cette lubrification, la tige filetée 2 n'est pas endommagée lors de la course du deuxième écrou de sécurité 6, et ils sont tous les deux réutilisables.

On comprend bien que, selon la conception de l'invention, la sécurité du dispositif 1 reste assurée, même si les utilisateurs passent outre aux précautions d'usage. Toutefois le coût de maintenance est différent en cas de simple échange, ou de réparation après un bris. L'écrou porteur 5, qui peut être récupérable, par exemple par appairage avec d'autres tiges filetées, dans le cas d'une maintenance planifiée, ne l'est évidemment plus en cas de rupture.

A ce sujet, il convient de faire remarquer que, malgré toutes les précautions d'élaboration, les écrous en bronze peuvent présenter des défauts métallurgiques indécelables à l'état neuf, et se briser, sous l'effets de certaines vibrations ou d'efforts minimes, ce qui donne un intérêt tout particulier au dispositif selon l'invention.

## Revendications

1. Dispositif de levage (1), notamment de véhicule, comprenant une colonne sensiblement verticale formant bâti et des moyens de levage mobiles le long de ladite colonne sous l'action de la commande en rotation, par des moyens moteurs appropriés, d'une tige filetée (2) et du déplacement, le long de cette dernière, d'un écrou (3) solidaire d'un chariot (4) sur lequel repose une charge (20) à élever, ledit écrou (3) étant un écrou parachute, qui comporte un premier écrou porteur (5) sur lequel repose ledit chariot (4), et un deuxième écrou de sécurité (6) coaxial au précédent et placé en-dessous de lui, et conçu apte à recevoir et à supporter la charge constituée par ledit chariot (4) et la charge (20) que celui-ci supporte et ledit premier écrou porteur (5) en cas de défaillance de ce dernier, notamment par usure ou rupture,
ledit écrou parachute (3) comportant des moyens de guidage (7), qui sont conçus aptes à coopérer avec des moyens de guidage complémentaire (7A), de façon à solidariser en rotation ledit premier écrou porteur (5) et ledit deuxième écrou de sécurité (6) quand ils sont éloignés l'un de l'autre, et à cesser de coopérer avec lesdits moyens de guidage complémentaire (7A), quand ledit premier écrou porteur (5) et ledit deuxième écrou de sécurité (6) sont en contact l'un avec l'autre,
**caractérisé par le fait que** lesdits moyens de guidage (7) et lesdits moyens de guidage complémentaire (7A) sont constitués par la combinaison d'un doigt (11) solidaire du premier (5) ou du deuxième (6) écrou, et d'une rainure (12) parallèle à la direction de ladite tige filetée (2) et ouverte à sa partie inférieure (13), ladite rainure (12) étant solidaire respectivement du deuxième (6) ou du premier (5) écrou,
et que le dimensionnement dudit doigt (11) et de ladite rainure (12), est calculé de façon à ce que le doigt (11) puisse échapper hors de la rainure (12) du côté de l'ouverture à sa partie inférieure (13), lorsque le premier écrou porteur (5) vient au contact du deuxième écrou de sécurité (6), de façon à rendre le deuxième écrou de sécurité (6) indépendant en rotation du premier écrou porteur (5).

2. Dispositif (1) selon la revendication 2, **caractérisé par le fait que** ledit premier écrou porteur (5) est, à l'état neuf, écarté dudit deuxième écrou de sécurité (6).

3. Dispositif (1) selon l'une des revendications 1 à 3, **caractérisé par le fait que** ledit écrou parachute (3) comporte au moins un indicateur d'usure (8) dudit premier écrou porteur (5).

4. Dispositif (1) selon la revendication 4, **caractérisé par le fait que** ledit indicateur d'usure (8) compare la position d'une surface fixe (9) dudit deuxième écrou de sécurité (6), avec celle d'un repère (10) solidaire dudit premier écrou porteur (5).

5. Dispositif (1) selon l'une des revendications 4 ou 5, **caractérisé par le fait que** ledit indicateur d'usure (8) comporte une fenêtre de lecture (14) munie d'un repère (15) d'usure nominale maximale.

6. Dispositif (1) selon l'une des revendications précédentes, **caractérisé par le fait que** ledit premier écrou porteur (5) a un coefficient de frottement inférieur à celui dudit deuxième écrou de sécurité (6).

7. Dispositif (1 selon l'une des revendications précédentes, **caractérisé par le fait que** ledit premier écrou porteur (5) est en bronze, et ledit deuxième écrou de sécurité (6) est en acier.

## Claims

1. Hoisting device (1), namely for a vehicle, comprising a substantially vertical column forming a frame and hoisting means movable along said column under the action of the control in rotation, by appropriate driving means, of a threaded rod (2) and the displacement, along the latter, of a nut (3) integral with a slide (4) on which rests a load (20) to be hoisted, said nut (3) being a parachute nut, which includes a first bearing nut (5) on which rests said slide (4), and a second safety nut (6) coaxial to the preceding one and placed below same, and designed capable of receiving and supporting the load formed by said slide (4) and the load (20) the latter supports and said first bearing nut (5) in the event of failure of the latter, namely due to wear or breakage,
said parachute nut (3) including guiding means (7), which are designed capable of cooperating with complementary guiding means (7A) so as to make said first bearing nut (5) and said complementary guiding means (7A) integral in rotation when said first bearing nut (5) and said complementary guiding means (7A) are into contact with each other,
wherein said guiding means (7) and said complementary guiding means (7A) are formed of the combination of a finger (11) integral with the first (5) or the second (6) nut, and of a groove (12) parallel to the direction of said threaded rod (2) and open in its lower portion (13), said groove (12) being integral with the second (6) or the first (5) nut, respectively,
and wherein the dimensioning of said finger (11) and said groove (12) is so calculated that the finger (11) can escape from the groove (12) on the side of the opening in its lower portion (13) when the first bearing nut (5) enters into contact with the second safety nut (6), which is independent in rotation from the first bearing nut (5).

2. Device (1) according to claim 2, wherein said first bearing nut (5) is, when new, distant from said second safety nut (6).

3. Device (1) according to one of claims 1 to 3, wherein said parachute nut (3) includes at least one wear indicator (8) for said first bearing nut (5).

4. Device (1) according to claim 3, wherein said wear indicator (8) compares the position of a fixed surface (9) of said second safety nut (6) with that of a mark (10) integral with said first bearing nut (5).

5. Device (1) according to one of claims 3 or 4, wherein said wear indicator (8) includes a reading window (14) provided with a maximum nominal wear mark (15).

6. Device (1) according to one of the preceding claims, wherein said first bearing nut (5) has a friction coefficient lower than that of said second safety nut (6).

7. Device (1) according to one of the preceding claims, wherein said first bearing nut (5) is made of bronze, and said second safety nut (6) is made of steel.

## Patentansprüche

1. Hebevorrichtung (1), nämlich für Fahrzeug, umfassend eine, ein Gerüst bildende im wesentlichen senkrechte Säule und Hebemittel, die unter der Wirkung der Steuerung in Drehung, mittels geeigneter Antriebsmittel, einer Gewindestange (2) und der Verschiebung entlang dieser letzteren einer Mutter (3), die fest mit einem Schlitten (4) verbunden ist, auf dem eine zu hebende Last (20) ruht, entlang der besagten Säule beweglich ist, wobei die besagte Mutter (3) eine Fallschirmmutter ist, die eine erste Tragmutter (5), auf der der besagte Schlitten (4) ruht, und eine zweite Sicherheitsmutter (6), die koaxial zur vorgehenden und unterhalb derselben angebracht ist, umfasst, und die geeignet vorgesehen ist, die durch den besagten Schlitten (4) und die von diesem letzteren und der besagten ersten Tragmutter (5) getragene Last (20) gebildet ist, aufzunehmen und zu tragen im Falle eines Versagens dieser letzteren, nämlich zufolge von Verschleiß oder Bruch,
wobei die besagte Fallschirmmutter (3) Führungsmittel (7) umfasst, die geeignet vorgesehen sind, um mit ergänzenden Führungsmitteln (7A) zusammenzuwirken, sodass die besagte erste Tragmutter (5) und die besagten ergänzenden Führungsmittel (7A) drehfest mit einander verbunden werden, wenn die besagte erste Tragmutter (5) und die besagten ergänzenden Führungsmittel (7A) mit einander in Berührung stehen,
**dadurch gekennzeichnet, dass** die besagten Führungsmittel (7) und die besagten ergänzenden Führungsmittel (7A) aus der Kombination eines fest mit der ersten (5) oder der zweiten (6) Mutter verbundenen Fingers (11) und einer Nut (12), die parallel zur Richtung der besagten Gewindestange (2) und in ihrem unteren Teil (13) offen ist, bestehen, wobei die besagte Nut (12) fest mit der zweiten (6) bzw. ersten (5) Mutter verbunden ist,
und dass die Dimensionierung des besagten Fingers (11) und der besagten Nut (12) so berechnet ist, dass der Finger (11) aus der Nut (12) an der Seite der Öffnung in deren unteren Teil (13) heraus gleiten kann, wenn die erste Tragmutter (5) mit der zweiten Sicherheitsmutter (6) in Berührung tritt, die unabhängig von der ersten Tragmutter (5) drehbar ist.

2. Vorrichtung (1) nach Anspruch 2, **dadurch gekennzeichnet, dass** die besagte erste Tragmutter (5), wenn in neuem Zustand, von der besagten zweiten Sicherheitsmutter (6) entfernt ist.

3. Vorrichtung (1) nach einem der Ansprüche 1 bis 3, **dadurch gekennzeichnet, dass** die Fallschirmmutter (3) wenigstens einen Verschleißanzeiger (8) für die besagte erste Tragmutter (5) umfasst.

4. Vorrichtung (1) nach Anspruch 3, **dadurch gekennzeichnet, dass** der besagte Verschleißanzeiger (8) die Position einer festen Oberfläche (9) der besagten zweiten Sicherheitsmutter (6) mit derjenigen einer fest mit der besagten ersten Tragmutter (5) verbundenen Markierung (10) vergleicht.

5. Vorrichtung (1) nach einem der Ansprüche 3 oder 4, **dadurch gekennzeichnet, dass** der besagte Verschleißanzeiger (8) ein mit einer maximalen Nennverschleiß-Markierung (15) versehenes Lesefenster (14) umfasst.

6. Vorrichtung (1) nach einem der vorgehenden Ansprüche, **dadurch gekennzeichnet, dass** die besagte erste Tragmutter (5) einen Reibungskoeffizienten aufweist, der niedriger ist als derjenigen der besagten zweiten Sicherheitsmutter (6).

7. Vorrichtung (1) nach einem der vorgehenden Ansprüche, **dadurch gekennzeichnet, dass** die besagte erste Tragmutter (5) aus Bronze, und die besagte zweite Sicherheitsmutter (6) aus Stahl ist.
